# FASCICULE DE BREVET EUROPEEN

(11) **EP 2 627 983 B1**
(45) Date de publication et mention de la délivrance du brevet: **01.04.2015**
(21) Numéro de dépôt: 11767007.5
(22) Date de dépôt: 10.10.2011
(51) Int. Cl.: G01M 17/007, B62H 1/12

(54) **DISPOSITIF ANTICHUTE POUR VEHICULE A DEUX ROUES**
FALLSCHUTZVORRICHTUNG FÜR EIN ZWEIRÄDRIGES FAHRZEUG
ANTIFALL DEVICE FOR TWO-WHEELED VEHICLE

(30) Priorité: 15.10.2010 FR 1058425
(43) Date de publication de la demande: 21.08.2013
(73) Titulaire: Compagnie Générale des Etablissements Michelin, 63000 Clermont-Ferrand (FR); Michelin Recherche et Technique S.A., 1763 Granges-Paccot (CH)
(72) Inventeur: POTIN, Yves, F-63040 Clermont-Ferrand Cedex 9 (FR); DURAND, Eric, F-63040 Clermont-Ferrand Cedex 9 (FR); BEAULATON, Daniel, F-63040 Clermont-Ferrand Cedex 9 (FR)
(74) Mandataire: Le Cam, Stéphane Georges Elie
(86) Numéro de dépôt international: PCT/EP2011/067615
(87) Numéro de publication internationale: WO 2012/049103

(56) Documents cités:
- EP-A2- 1 142 779
- FR-A1- 2 847 224

## Description

L'invention a pour objet un dispositif antichute pour un véhicule à deux roues.

Bien que non limitée à cette application, l'invention sera plus particulièrement décrite en référence à un dispositif antichute pour un véhicule à deux roues de type vélo.

Le développement et la mise au point d'un pneumatique, en particulier pour un véhicule à deux roues, nécessitent la réalisation de tests sur véhicule. Parmi les tests réalisés, les tests d'adhérence d'un pneumatique, en particulier sur un sol mouillé, sont d'une grande importance pour apprécier la performance du pneumatique en termes de sécurité. Un test d'adhérence couramment utilisé (le document EP 1142779) est un test d'adhérence transversale d'un véhicule à deux roues se déplaçant sur une trajectoire circulaire à une vitesse donnée, sur un sol mouillé. Ce test simule le comportement d'un pneumatique lorsque le véhicule prend un virage et, en particulier, sa capacité d'adhérence transversale, c'est-à-dire selon une direction perpendiculaire à la trajectoire du véhicule. Le document WO2009147235 définit un procédé d'estimation de l'adhérence transversale d'un couple de pneumatiques par analyse comparative.

Il est connu qu'un véhicule de masse M, dont le centre de gravité se déplace sur une trajectoire circulaire de rayon R, à une vitesse V, est soumis à une force centrifuge F=M*V²/R, qui tend à faire sortir le véhicule de sa trajectoire. Pour que le véhicule reste sur sa trajectoire, l'interface des pneumatiques avec le sol doit générer une force centripète équilibrant la force centrifuge. Cette force centripète est générée par l'adhérence des pneumatiques avec le sol qui développe alors une force de frottement transversale F_{Y} appliquée sur le pneumatique. La force de frottement transversale F_{Y}, qui est la résultante des forces de frottement appliquées sur les deux pneumatiques du véhicule à deux roues, dépend de la charge verticale F_{Z} appliquée par le véhicule sur le sol, de l'état du sol et du matériau des pneumatiques en contact avec le sol. On définit ainsi f tel que f = F_{Y} / F_{Z}. Pour permettre au véhicule de suivre la trajectoire désirée à la vitesse désirée, f doit être au plus égal au coefficient d'adhérence disponible à l'interface pneumatique/sol appelé également coefficient de frottement.

Il est également connu qu'un véhicule à deux roues dont le centre de gravité se déplace sur une trajectoire circulaire de rayon R, à une vitesse donnée V, forme, avec le plan vertical tangent à la trajectoire, un angle C, orienté vers l'intérieur de la trajectoire, appelé angle de carrossage. Plus précisément, l'angle de carrossage est l'angle que forme le plan moyen du véhicule, c'est-à-dire le plan de symétrie de la structure du véhicule contenant le centre de gravité du véhicule, avec le plan vertical tangent à la trajectoire. La tangente de l'angle de carrossage C est proportionnelle à la force centrifuge, c'est-à-dire à la résultante des forces d'adhérence sur les pneumatiques F_{Y}, et vérifie la relation tan(C) = V²/R.g, où g désigne l'accélération de la pesanteur. Ainsi pour une trajectoire circulaire donnée de rayon R et un coefficient d'adhérence donné, lorsque la vitesse V augmente, l'angle de carrossage C augmente jusqu'à un angle limite, qui correspond à la limite d'adhérence, au-delà duquel les pneumatiques glissent sur le sol, entraînant la chute du véhicule et de son conducteur.

La détermination de l'angle limite, pour une trajectoire circulaire et un coefficient d'adhérence donnés, est difficile à réaliser avec un véhicule à deux roues traditionnel, car il est délicat pour le conducteur de se maintenir à cet angle limite, en vue de sa mesure, sans chuter.

Les inventeurs se sont donnés pour objectif d'empêcher la chute d'un véhicule à deux roues et de son conducteur, lorsque l'angle de carrossage atteint l'angle limite correspondant à la limite d'adhérence des pneumatiques, pour une trajectoire circulaire et un coefficient d'adhérence donnés, tout en permettant la mesure de cet angle limite.

Cet objectif a été atteint, selon l'invention, par un dispositif antichute pour un véhicule à deux roues équipé de pneumatiques, le centre de gravité G du véhicule se déplaçant sur une trajectoire circulaire de centre O et de rayon R à une vitesse V, le plan moyen du véhicule, contenant le centre de gravité G, formant avec le plan vertical tangent à la trajectoire un angle de carrossage, l'angle de carrossage augmentant avec la vitesse V et pouvant varier entre un angle nul et un angle limite au-delà duquel il y a perte d'adhérence transversale des pneumatiques entraînant la chute du véhicule,
le dispositif antichute étant fixé latéralement sur le côté du véhicule intérieur à la trajectoire, et limitant l'angle de carrossage, lorsque la vitesse V augmente, à un angle maximal strictement supérieur à l'angle limite,
le dispositif antichute comprenant une roue de sécurité, dont le plan moyen coupe le plan moyen du véhicule selon une droite située au-dessus du sol en formant un angle qui diffère de l'angle maximal d'au plus 5°, un moyen de réglage de l'angle maximal et un moyen de liaison entre la roue de sécurité et le véhicule.

Dans le présent document, on appelle :
- direction longitudinale: la direction tangente à la trajectoire en un point de la trajectoire,
- direction transversale: la direction perpendiculaire à la trajectoire en un point de la trajectoire.
- direction verticale: la direction perpendiculaire au plan défini par les directions respectivement longitudinale et transversale.
- plan vertical tangent à la trajectoire: le plan défini par les directions respectivement longitudinale et verticale.
- plan horizontal: le plan défini par les directions respectivement longitudinale et transversale.

Le dispositif antichute de l'invention permet d'atteindre l'angle limite, à partir duquel il y a perte d'adhérence des pneumatiques, sans chuter. Tant que le véhicule a un angle de carrossage inférieur à l'angle limite, les pneumatiques roulent de façon adhérente au sol et le véhicule se déplace sur sa trajectoire. Dès que l'angle limite est atteint, les pneumatiques commencent à glisser et l'angle de carrossage augmente très rapidement. L'angle de carrossage est alors bloqué, par le dispositif antichute, à un angle maximal supérieur à l'angle limite: ce qui permet d'une part d'éviter la chute du véhicule et de son conducteur, d'autre part de permettre au véhicule de poursuivre son déplacement sur sa trajectoire.

Le principe d'un angle de carrossage maximal strictement supérieur à l'angle limite d'adhérence permet donc de mesurer au cours d'un test cet angle limite, puisque celui-ci est compris dans l'intervalle des angles de carrossage autorisés. Ce principe de blocage de l'angle de carrossage après la perte d'adhérence n'est pas adapté pour un dispositif de sécurité classique, dans lequel on recherche a priori un blocage de l'angle de carrossage avant d'avoir atteint la limite d'adhérence.

En pratique, l'angle maximal de carrossage du dispositif antichute est réglé initialement à une valeur prédéterminée, ce qui autorise une vitesse maximale donnée, fonction du rayon de la trajectoire et du coefficient d'adhérence du sol. Si la perte d'adhérence des pneumatiques se produit à une vitesse inférieure à cette vitesse maximale autorisée, c'est-à-dire à un angle limite inférieur à l'angle maximal prédéterminé, l'angle limite et la vitesse limite correspondante peuvent être déterminés avec ce réglage d'angle maximal. En revanche, si la perte d'adhérence ne se produit pas pour une vitesse inférieure à la vitesse maximale autorisée, c'est-à-dire pour un angle limite inférieur à l'angle maximal prédéterminé, un réglage de l'angle maximal à une valeur plus élevée est nécessaire.

Le dispositif antichute est fixé latéralement sur le côté du véhicule intérieur à la trajectoire, c'est-à-dire du côté où s'incline le véhicule. Une fixation latérale signifie que le dispositif antichute est sensiblement positionné dans l'axe du centre de gravité du véhicule, c'est-à-dire ni au niveau de la roue arrière, ni au niveau de la roue avant, mais entre les deux roues.

Le dispositif antichute comprend une roue de sécurité, dont le plan moyen coupe le plan moyen du véhicule selon une droite située au-dessus du sol en formant un angle qui diffère de l'angle maximal d'au plus 5°, un moyen de réglage de l'angle maximal et un moyen de liaison entre la roue de sécurité et le véhicule.

La roue de sécurité est un moyen simple, efficace et peu coûteux apte à remplir la fonction antichute. En tant que roue auxiliaire, la roue de sécurité présente l'avantage de permettre au véhicule de continuer à rouler sur trois roues, après avoir basculé vers l'intérieur de la trajectoire, suite à la perte d'adhérence des pneumatiques. Le fait que la roue de sécurité ait un plan moyen, coupant le plan moyen du véhicule selon une droite située au-dessus du sol en formant un angle qui diffère de l'angle maximal d'au plus 5°, implique que la roue de sécurité entre en contact avec le sol selon une direction sensiblement verticale. Par direction sensiblement verticale, on entend une inclinaison du plan moyen de la roue de sécurité inférieure à + ou -5° par rapport au plan vertical. Un contact quasi vertical de la roue de sécurité avec le sol, c'est-à-dire avec un angle de carrossage de la roue de sécurité quasi nul, ne génère pas de force transversale susceptible de perturber la trajectoire du véhicule et permet au véhicule la poursuite de sa trajectoire sans risque de chute.

Un moyen de réglage de l'angle maximal permet de balayer l'intervalle d'angles maximaux nécessaire à la détermination des angles limites et des vitesses limites vis-àvis de l'adhérence sur divers types de revêtements routiers secs ou mouillés.

Un moyen de liaison entre la roue de sécurité et le véhicule permet de solidariser la roue de sécurité au véhicule, généralement, mais pas exclusivement, de façon amovible. Le moyen de liaison présente également une interface structurelle avec le moyen de réglage de l'angle maximal.

Avantageusement, l'angle maximal est au moins égal à 10° et au plus égal à 60°, et de préférence au moins égal à 20° et au plus égal à 45°.

Un intervalle de réglage de l'angle maximal entre 10° et 60° permet de déterminer l'angle limite et la vitesse limite correspondante, sur divers types de revêtements routiers, de granulométries différentes, secs ou mouillés, dans un large intervalle de valeurs du coefficient d'adhérence du sol. Classiquement, les revêtements routiers sur lesquels les pneumatiques sont testés sont des revêtements goudronnés ou bitumineux, à coefficients d'adhérence plutôt élevés, par exemple de l'ordre de 1.0, et des revêtements de type béton poli, à coefficient d'adhérence plutôt faibles, de l'ordre de 0.1 à 0.2. Un intervalle préférentiel de réglage de l'angle maximal entre 20° et 45° permet de tester l'adhérence transversale des pneumatiques sur les revêtements routiers les plus courants, pour des vitesses comprises entre 0 et 40 km/h caractéristiques d'un véhicule à deux roues de type vélo.

Il est également avantageux que, pour un dispositif antichute comprenant une roue de sécurité, le centre de la roue de sécurité soit positionné à une distance du plan moyen du véhicule, telle que le centre de la roue de sécurité décrit une trajectoire circulaire, dont le centre est coaxial au centre de la trajectoire circulaire du centre de gravité du véhicule, et dont le rayon est au plus égal au rayon de la trajectoire circulaire du centre de gravité du véhicule.

Un tel positionnement du centre de la roue par rapport au plan moyen du véhicule, selon une direction transversale, permet de garantir que la projection du centre de gravité du véhicule est positionnée entre la trace au sol du plan moyen du véhicule, passant sensiblement par les contacts au sol des pneumatiques avant et arrière du véhicule, et le contact au sol de la roue de sécurité, ce qui empêche le basculement de l'ensemble véhicule-conducteur, par rotation autour de la direction longitudinale, et donc sa chute.

Une roue de sécurité a avantageusement un diamètre extérieur au moins égal à la moitié du diamètre extérieur des pneumatiques montés sur le véhicule à deux roues. Cette caractéristique permet de limiter la distance entre le centre de la roue de sécurité et le plan moyen du véhicule, donc de réduire l'encombrement transversal du dispositif antichute et d'améliorer la maniabilité du véhicule équipé d'un tel dispositif antichute.

Il est encore avantageux que, pour un dispositif antichute comprenant une roue de sécurité, le centre de la roue de sécurité soit positionné sensiblement dans le plan vertical passant par le centre de gravité du véhicule et perpendiculaire au plan moyen du véhicule.

Par centre de gravité du véhicule, on entend le centre de gravité du véhicule, avec son conducteur, le véhicule étant équipé du dispositif antichute. Un positionnement du centre de la roue dans un plan vertical passant par le centre de gravité du véhicule et perpendiculaire au plan moyen du véhicule permet de conserver la répartition de la charge verticale de l'ensemble véhicule-conducteur entre la roue avant et la roue arrière. Typiquement, 30% de la charge verticale est appliquée sur la roue avant et 70% de la charge verticale est appliquée sur la roue arrière. Cette conservation de la répartition de charge permet d'éviter de perturber la trajectoire circulaire du véhicule par la mise en lacet, c'est-à-dire la mise en rotation autour d'un axe vertical passant par le centre de gravité du véhicule, lorsque la roue de sécurité entre en contact avec le sol. Un positionnement du centre de la roue strictement dans le plan vertical précédemment défini, difficile à obtenir en pratique du fait de la variabilité de la position du centre de gravité du conducteur, n'est pas indispensable : un positionnement sensiblement dans ledit plan vertical, c'est-à-dire dans son voisinage, est acceptable.

La droite, intersection avec le sol sensiblement horizontal du plan moyen de la roue de sécurité en contact avec le sol, forme avec la droite, intersection du plan moyen du véhicule avec le sol sensiblement horizontal, un angle d'ouverture constant compris entre 0° et 5°.

Par angle d'ouverture, on entend l'angle entre deux droites qui divergent selon le sens de rouage. L'angle d'ouverture permet au véhicule de rester sur sa trajectoire circulaire après l'entrée en contact avec le sol de la roue de sécurité. La conservation de la trajectoire circulaire du véhicule après l'entrée en contact avec le sol de la roue de sécurité évite ainsi au conducteur toute correction de trajectoire par un mouvement du guidon du véhicule pouvant déstabiliser le véhicule et entraîner une chute éventuelle. L'angle d'ouverture constant est choisi en fonction du rayon de la trajectoire circulaire : il est d'autant plus élevé que ce rayon est faible. Pour le cas limite d'un rayon infini, correspondant à une trajectoire rectiligne, l'angle d'ouverture est nul.

Le moyen de réglage de l'angle maximal de carrossage peut être adapté à l'obtention d'un nombre discret de valeurs de l'angle maximal dans l'intervalle [10°, 60°]. En d'autres termes, toutes les valeurs d'angle comprises entre 10° et 60° ne peuvent être obtenues à l'aide du moyen de réglage, mais seulement un nombre fini d'entre elles: Par exemple, le moyen de réglage peut permettre d'ajuster l'angle maximal tous les 2.5°.

Une variante du moyen de réglage permet avantageusement l'obtention de toute valeur de l'angle maximal dans l'intervalle [10°, 60°], ce qui permet un réglage plus précis du dispositif antichute.

Le moyen de réglage est avantageusement positionné entre la roue de sécurité et le moyen de liaison et est encore avantageusement fixé de manière amovible à la roue de sécurité et au moyen de liaison. Ce positionnement du moyen de réglage a l'avantage de la simplicité, car il permet un réglage à l'interface avec la roue de sécurité, en ajustant, par exemple, la position du centre de la roue par rapport au moyen de liaison. Par ailleurs, la démontabilité du moyen de réglage est facilitée : il suffit de démonter la roue pour avoir accès au moyen de réglage. Un positionnement du moyen de réglage entre le moyen de liaison et le véhicule est possible mais conduit a priori à un accès plus difficile au moyen de réglage.

Une variante avantageuse est d'avoir un moyen de réglage ajustable selon une direction fixe, en vue de l'obtention d'un angle maximal donné dans l'intervalle [10°, 60°]. Un ajustement unidirectionnel présente l'avantage de la simplicité.

A titre d'exemple, un moyen de réglage ajustable selon une direction fixe comprend une cale de section triangulaire, dont une face est fixée au moyen de liaison et une autre face est fixée à la roue de sécurité. Le déplacement de la fixation à la roue de sécurité, le long de la face concernée du triangle, permet ainsi de balayer simplement plusieurs valeurs d'angle maximal, la fixation au moyen de liaison restant en place.

Le moyen de liaison comprend avantageusement une structure tubulaire indéformable. Par structure tubulaire, on entend, par exemple, un assemblage de tubes, reliés deux à deux pour former formant un treillis, tel qu'une structure de forme tétraédrique à trois tubes. Par structure indéformable, on entend une structure susceptible de très faibles déformations sous les sollicitations appliquées, en raison de sa rigidité. Il est connu qu'une structure tubulaire permet d'atteindre la rigidité requise pour être considérée comme indéformable, tout en garantissant une masse de structure relativement faible.

Une variante préférée de structure tubulaire est une structure tubulaire indéformable métallique, de préférence en aluminium. L'aluminium présente en effet l'avantage d'être un matériau facile à mettre en oeuvre, léger et économique. Une structure tubulaire en carbone peut être également envisagée pour sa légèreté et sa rigidité ; toutefois, elle est moins économique qu'une structure en aluminium.

Un moyen dé liaison, sous forme d'une structure tubulaire, présente encore l'avantage de pouvoir être configuré pour répondre à des exigences d'ergonomie et de sécurité.

Concernant l'ergonomie, la structure tubulaire peut être configurée pour permettre le passage de la jambe du conducteur entre le véhicule et la roue de sécurité et, le cas échéant ; le blocage du pied du conducteur, par exemple, par la fixation d'un repose pied sur la structure tubulaire.

En ce qui concerne la sécurité, la structure tubulaire peut être configurée pour permettre la protection du pied et de la cheville du conducteur, côté dispositif anti-chute. En effet, lors de la perte d'adhérence des pneumatiques et du basculement du véhicule jusqu'à l'angle maximal, le conducteur va avoir le réflexe de poser le pied au sol, du côté du dispositif antichute : d'où la nécessité de mettre en place un moyen de protection, tel que, à titre d'exemple, un filet fixé à la structure tubulaire, permettant la retenue du pied du conducteur lors du basculement du véhicule et d'éviter ainsi le coincement du pied du conducteur entre le sol et le moyen de liaison.

L'invention concerne également un véhicule à deux roues équipé d'un dispositif antichute tel que précédemment décrit, et en particulier un vélo de test.

Les caractéristiques et autres avantages de l'invention seront mieux compris à l'aide des figures annexées 1 à 3B.

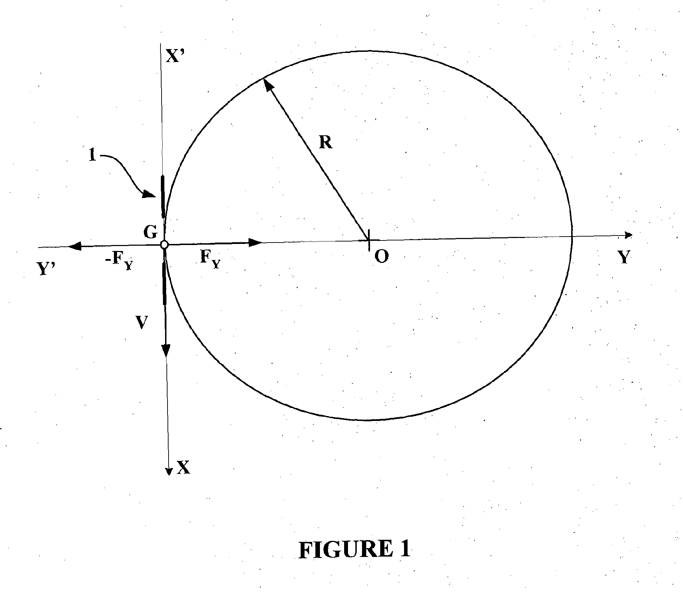

Les figures 1 à 3B ne sont pas représentées à l'échelle.

La figure 1 présente une vue de dessus d'un véhicule à deux roues 1 de centre de gravité G, se déplaçant sur une trajectoire circulaire de centre O et de rayon R à une vitesse V tangente à la trajectoire. En G est défini un repère orthonormé d'axe longitudinal XX', d'axe transversal YY' et d'axe vertical ZZ' (non représenté car perpendiculaire au plan XY). Le véhicule à deux roues de masse M, M étant la masse de l'ensemble véhicule-conducteur, est soumis à la force centrifuge -F_{Y} = M*V²/R appliquée au centre de gravité G de l'ensemble véhicule-conducteur et équilibrée par la force centripète F_{Y}. L'ensemble véhicule-conducteur est également soumis à la charge verticale F_{Z} = Mg, où g est l'accélération de la pesanteur, non représentée car perpendiculaire au plan XY

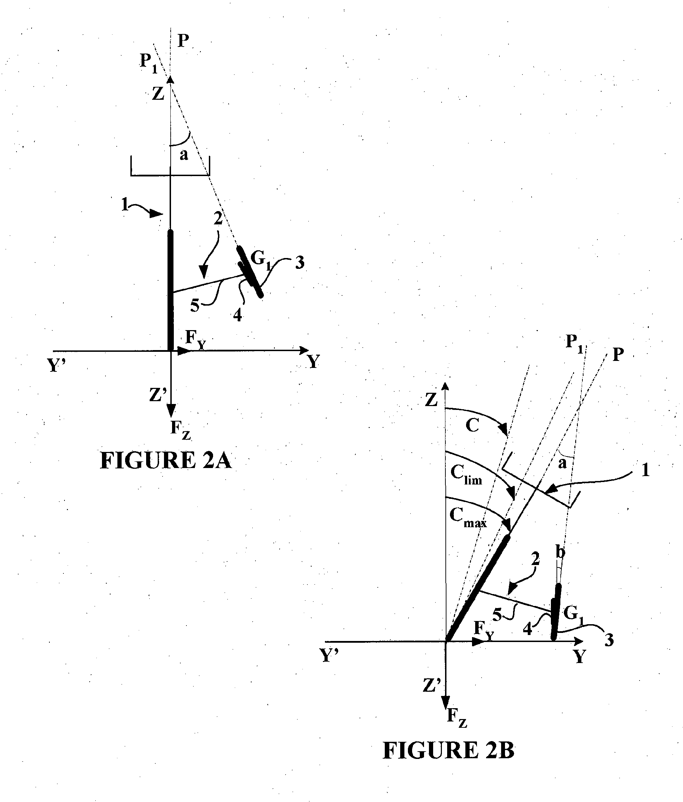

La figure 2A présente un véhicule à deux roues 1 équipé d'un dispositif antichute 2, le plan moyen du véhicule P étant tangent à la trajectoire, c'est-à-dire dans le plan XZ. Le dispositif antichute 2 comprend une roue de sécurité 3 de centre G₁, dont le plan moyen P₁ coupe le plan moyen P du véhicule 1 selon une droite située au-dessus du sol en formant un angle a qui diffère de l'angle maximal Cₘₐₓ d'au plus 5°, un moyen de réglage 4 de l'angle maximal Cₘₐₓ et un moyen de liaison 5 entre la roue de sécurité 3 et le véhicule 1. A l'interface du véhicule avec le sol sont représentées la force de frottement transversale F_{Y}, résultante des forces de frottement sur chacun des pneumatiques, et la charge verticale F_{Z} due à la masse de véhicule,équipé du dispositif antichute, et du conducteur, et exercée sur le sol.

La figure 2B présente un véhicule à deux roues 1 équipé d'un dispositif antichute 2, après atteinte de la limite d'adhérence. Le rapport f = F_{Y} / F_{Z}. ayant atteint le coefficient d'adhérence disponible à l'interface pneumatique/sol pour l'angle limite Cₗᵢₘ, l'angle de carrossage C a continué à augmenter, en raison du glissement des pneumatiques sur le sol, jusqu'à l'angle maximal Cₘₐₓ, auquel le dispositif antichute est réglé en vue de bloquer l'inclinaison du véhicule et d'empêcher sa chute. Dans cette configuration, le véhicule continue à se déplacer sur trois roues : les deux roues du véhicule et la roue de sécurité 3. Le plan moyen P₁ de la roue de sécurité 3 du dispositif antichute 2 forme un angle a avec le plan moyen P du véhicule 1 et, lorsque la roue de sécurité 3 entre en contact avec le sol, elle forme avec la direction verticale ZZ' un angle b inférieur à 5°, c'est-à-dire que la roue de sécurité 3 est positionnée sensiblement verticalement par rapport au sol. Le dispositif antichute 2 comprend également un moyen de réglage 4 de l'angle maximal Cₘₐₓ et un moyen de liaison 5 entre la roue de sécurité 3 et le véhicule 1.

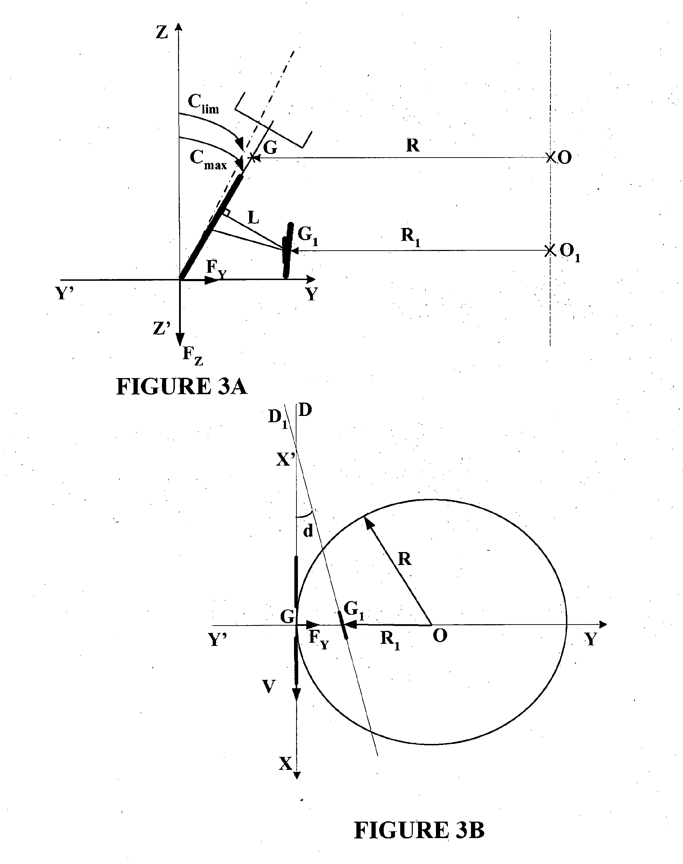

La figure 3A représente le véhicule à deux roues 1 incliné d'un angle de carrossage égal à l'angle maximal Cₘₐₓ, et donc se déplaçant sur les deux roues du véhicule 1 et sur la roue de sécurité 3. Le centre G₁ de la roue de sécurité 3 est positionné à une distance L du plan moyen P du véhicule, telle que le centre G₁ de la roue de sécurité 3 décrit une trajectoire circulaire, dont le centre O₁ est coaxial au centre O de la trajectoire circulaire du centre de gravité G du véhicule, et dont le rayon R₁ est au plus égal au rayon R de la trajectoire circulaire du centre de gravité G du véhicule 1.

La figure 3B représente une vue de dessus du véhicule 1 incliné d'un angle de carrossage égal à l'angle maximal Cₘₐₓ, et donc se déplaçant sur les deux roues du véhicule 1 et sur la roue de sécurité 3. Cette figure montre que le centre G₁ de la roue de sécurité est positionné sensiblement dans le plan vertical YZ passant par le centre de gravité G du véhicule et perpendiculaire au plan moyen P du véhicule. En outre, cette figure décrit l'orientation du plan moyen P₁ de la roue de sécurité 3 par rapport au plan moyen P du véhicule 1 dans le plan XY : la droite D₁, intersection avec le sol sensiblement horizontal du plan moyen P₁ de la roue de sécurité 3 en contact avec le sol, forme avec la droite D, intersection du plan moyen P du véhicule avec le sol sensiblement horizontal, un angle d'ouverture d compris entre 0° et 5° permettant au véhicule de rester sur sa trajectoire circulaire après l'entrée en contact avec le sol de la roue de sécurité.

L'invention a été plus particulièrement étudiée pour un véhicule de test à deux roues, de type vélo, dont le dispositif antichute comprend :
- une roue de sécurité de diamètre environ égal à la moitié du diamètre extérieur des pneumatiques testés
- un moyen de réglage de l'angle maximal ayant la forme d'une cale métallique, positionnée entre la roue de sécurité et le moyen de liaison, et permettant de régler l'angle maximal entre 20° et 45°, tous les 2.5°,
- un moyen de liaison sous la forme d'une structure tubulaire, formée de trois tubes constituant un tétraèdre dont le sommet est connecté à la roue de sécurité et la base au cadre du vélo.

Par ailleurs, la compatibilité du dispositif antichute avec le véhicule de test a nécessité d'adapter la configuration d'un vélo traditionnel comme suit:
- Suppression de la pédale, côté dispositif antichute, pour éviter tout contact de la pédale avec le sol, à angle de carrossage élevé, et pour pouvoir mettre en place la structure de liaison tubulaire.
- Blocage en position horizontale de la pédale, côté opposé au dispositif antichute.
- Fixation d'un repose pied intégré à la structure de liaison tubulaire.
- Fixation d'un filet de protection à la structure de liaison tubulaire.
- Motorisation du véhicule par un moteur électrique intégré dans la roue arrière et alimenté par une batterie fixée sur le véhicule, pour pouvoir assurer le déplacement du vélo sans pédale.
- Système de mesure de la position dans l'espace du véhicule à tout instant, intégré au vélo.

Des tests d'adhérence transversale ont été réalisés avec le vélo de test précédemment décrit, équipé d'un dispositif antichute selon l'invention, et pouvant se déplacer jusqu'à une vitesse maximale d'environ 40 km/h, sur une piste circulaire de rayon R=9m et sur des revêtements routiers mouillés de diverse nature. L'angle limite Cₗᵢₘ, sur sol bitumineux (sol rugueux) mouillé, a été mesuré à environ 40° pour une vitesse V égale à 35 km/h. L'angle limite Cₗᵢₘ sur béton poli (sol lisse) mouillé a été mesuré entre 25 et 30° pour une vitesse comprise entre 23 et 30 km/h.

L'invention ne doit pas être interprétée comme étant limitée aux modes de réalisation précédemment décrits, mais peut être étendue à d'autres modes de réalisation, tels que par exemple et de façon non exhaustive :
- un dispositif antichute comprenant un moyen de liaison autre qu'un treillis tubulaire,
- un dispositif antichute dont le moyen de réglage est multidirectionnel,
- un dispositif anti-chute dans l'angle maximal de blocage Cₘₐₓ est réglable en continu, en cours de test, en fonction des conditions d'adhérence rencontrées,
- un dispositif antichute adapté à un véhicule à deux roues de type motocyclette, pouvant se déplacer à des vitesses supérieures à 40 km/h.

## Revendications

1. Dispositif antichute (2) pour un véhicule à deux roues (1) équipé de pneumatiques, le centre de gravité (G) du véhicule se déplaçant sur une trajectoire circulaire de centre O et de rayon R à une vitesse V, le plan moyen (P) du véhicule, contenant le centre de gravité (G), formant avec le plan vertical (XZ) tangent à la trajectoire un angle de carrossage (C), l'angle de carrossage (C) augmentant avec la vitesse V du véhicule et pouvant varier entre un angle nul et un angle limite (Cₗᵢₘ) au-delà duquel il y a perte d'adhérence transversale des pneumatiques entraînant la chute du véhicule, le dispositif antichute (2) étant fixé latéralement sur le côté du véhicule intérieur à la trajectoire, et limitant l'angle de carrossage (C), lorsque la vitesse V augmente, à un angle maximal (Cₘₐₓ) strictement supérieur à l'angle limite (Cₗᵢₘ), **caractérisé en ce que** le dispositif antichute (2) comprend une roue de sécurité (3) de centre (G₁), dont le plan moyen (P₁) coupe le plan moyen (P) du véhicule selon une droite située au-dessus du sol en formant un angle (a) qui diffère de l'angle maximal (Cₘₐₓ) d'au plus 5°, un moyen de réglage (4) de l'angle maximal (Cₘₐₓ) et un moyen de liaison (5) entre la roue de sécurité (3) et le véhicule (1).

2. Dispositif antichute (2) pour un véhicule à deux roues (1) selon la revendication 1, **caractérisé en ce que** l'angle maximal (Cₘₐₓ) est au moins égal à 10° et au plus égal à 60°, et de préférence au moins égal à 20° et au plus égal à 45°.

3. Dispositif antichute (2) pour un véhicule à deux roues (1) selon l'une des revendications 1 ou 2, **caractérisé en ce que** le centre (G₁) de la roue de sécurité (3) est positionné à une distance (L) du plan moyen (P) du véhicule (1), telle que le centre (G₁) de la roue de sécurité (3) décrit une trajectoire circulaire, dont le centre (O₁) est coaxial au centre (O) de la trajectoire circulaire du centre de gravité (G) du véhicule, et dont le rayon (R₁) est au plus égal au rayon (R) de la trajectoire circulaire du centre de gravité (G) du véhicule.

4. Dispositif antichute (2) pour un véhicule à deux roues (1) selon l'une quelconque des revendications 1 à 3, **caractérisé en ce que** le centre (G₁) de la roue de sécurité (3) est positionné sensiblement dans le plan vertical (YZ) passant par le centre de gravité (G) du véhicule et perpendiculaire au plan moyen du véhicule (1).

5. Dispositif antichute (2) pour un véhicule à deux roues (1) selon l'une quelconque des revendications 1 à 4, **caractérisé en ce que** la droite (D₁), intersection avec le sol sensiblement horizontal du plan moyen (P₁) de la roue de sécurité (3) en contact avec le sol, forme avec la droite (D), intersection du plan moyen (P) du véhicule (1) avec le sol sensiblement horizontal, un angle d'ouverture (d) compris entre 0° et 5°.

6. Dispositif antichute (2) pour un véhicule à deux roues (1) selon l'une quelconque des revendications 1 à 5, **caractérisé en ce que** le moyen de réglage (4) est adapté à l'obtention d'un nombre discret de valeurs de l'angle maximal (Cₘₐₓ) dans l'intervalle [10°, 60°].

7. Dispositif antichute (2) pour un véhicule à deux roues (1) selon l'une quelconque des revendications 1 à 5, **caractérisé en ce que** le moyen de réglage (4) est adapté à l'obtention de toute valeur de l'angle maximal (Cₘₐₓ) dans l'intervalle [10°, 60°].

8. Dispositif antichute (2) pour un véhicule à deux roues (1) selon l'une quelconque des revendications 1 à 7, **caractérisé en ce que** le moyen de réglage (4) est positionné entre la roue de sécurité (3) et le moyen de liaison (5).

9. Dispositif antichute (2) pour un véhicule à deux roues (1) selon la revendication 1 à 8, **caractérisé en ce que** le moyen de réglage (4) est fixé de manière amovible à la roue de sécurité (3) et au moyen de liaison (5).

10. Dispositif antichute (2) pour un véhicule à deux roues (1) selon la revendication 1 à 9, **caractérisé en ce que** le moyen de réglage (4) est ajustable selon une direction fixe en vue de l'obtention d'un angle maximal (γₘₐₓ) donné dans l'intervalle [10°, 60°].

11. Dispositif antichute (2) pour un véhicule à deux roues (1) selon l'une quelconque des revendications 1 à 10, **caractérisé en ce que** le moyen de liaison (5) comprend une structure tubulaire indéformable.

12. Dispositif antichute (2) pour un véhicule à deux roues (1) selon la revendication 1 à 11, **caractérisé en ce que** le moyen de liaison (5) comprend une structure tubulaire indéformable métallique, de préférence en aluminium.

13. Véhicule à deux roues (1) équipé d'un dispositif antichute selon l'une quelconque des revendications 1 à 12.

## Patentansprüche

1. Fallschutzvorrichtung (2) für ein zweirädriges Fahrzeug (1), das mit Luftreifen ausgestattet ist, wobei sich der Schwerpunkt (G) des Fahrzeugs mit einer Geschwindigkeit V auf einer kreisförmigen Bahn mit dem Mittelpunkt O und dem Radius R bewegt, wobei die mittlere Ebene (P) des Fahrzeugs, die den Schwerpunkt (G) enthält, mit der tangential zu der Bahn verlaufenden vertikalen Ebene (XZ) einen Sturzwinkel (C) bildet, wobei der Sturzwinkel (C) mit der Geschwindigkeit V des Fahrzeugs zunimmt und zwischen einem Winkel von null und einem Grenzwinkel (Cₗᵢₘ), über den hinaus es einen Querhaftungsverlust der Luftreifen gibt, was den Fall des Fahrzeugs mit sich bringt, variieren kann, wobei die Fallschutzvorrichtung (2) lateral an der Innenseite des Fahrzeugs bezüglich der Bahn befestigt ist und den Sturzwinkel (C) bei Zunahme der Geschwindigkeit V auf einen maximalen Winkel (Cₘₐₓ) begrenzt, der strikt größer als der Grenzwinkel (Cₗᵢₘ) ist, **dadurch gekennzeichnet, dass** die Fallschutzvorrichtung (2) ein Sicherheitsrad (3) mit der Mitte (G₁), deren mittlere Ebene (P1) die mittlere Ebene (P) des Fahrzeugs entlang einer Geraden schneidet, die sich über dem Boden befindet und einen Winkel (a) damit bildet, der sich um höchsten 5° von dem maximalen Winkel (Cₘₐₓ) unterscheidet, ein Mittel (4) zur Einstellung des maximalen Winkels (Cₘₐₓ) und ein Verbindungsmittel (5) zwischen dem Sicherheitsrad (3) und dem Fahrzeug (1) umfasst.

2. Fallschutzvorrichtung (2) für ein zweirädriges Fahrzeug (1) nach Anspruch 1, **dadurch gekennzeichnet, dass** der maximale Winkel (Cₘₐₓ) mindestens 10° und höchstens 60° und vorzugsweise mindestens 20° und höchstens 45° beträgt.

3. Fallschutzvorrichtung (2) für ein zweirädriges Fahrzeug (1) nach Anspruch 1 oder 2, **dadurch gekennzeichnet, dass** die Mitte (G₁) des Sicherheitsrads (3) in einem Abstand (L) von der mittleren Ebene (P) des Fahrzeugs (1) positioniert ist, so dass die Mitte (G₁) des Sicherheitsrads (3) eine kreisförmige Bahn beschreibt, deren Mitte (O₁) koaxial zu der Mitte (O) der kreisförmigen Bahn des Schwerpunkts (G) des Fahrzeugs ist und deren Radius (R₁) höchstens gleich dem Radius (R) der kreisförmigen Bahn des Schwerpunkts (G) des Fahrzeugs ist.

4. Fallschutzvorrichtung (2) für ein zweirädriges Fahrzeug (1) nach einem der Ansprüche 1 bis 3, **dadurch gekennzeichnet, dass** die Mitte (G₁) des Sicherheitsrads (3) im Wesentlichen in der vertikalen Ebene (YZ) positioniert ist, die durch den Schwerpunkt (G) des Fahrzeugs und senkrecht zur mittleren Ebene des Fahrzeugs (1) verläuft.

5. Fallschutzvorrichtung (2) für ein zweirädriges Fahrzeug (1) nach einem der Ansprüche 1 bis 4, **dadurch gekennzeichnet, dass** die Gerade (D₁), die der Schnittpunkt zwischen dem im Wesentlichen horizontalen Boden und der mittleren Ebene (P₁) des Sicherheitsrads (3) in Kontakt mit dem Boden ist, mit der Geraden (D), die der Schnittpunkt zwischen der mittleren Ebene (P) des Fahrzeugs (1) und dem im Wesentlichen horizontalen Boden ist, einen Öffnungswinkel (d) von zwischen 0° und 5° bildet.

6. Fallschutzvorrichtung (2) für ein zweirädriges Fahrzeug (1) nach einem der Ansprüche 1 bis 5, **dadurch gekennzeichnet, dass** das Einstellmittel (4) zum Erhalt einer diskreten Zahl von Werten für den maximalen Winkel (Cₘₐₓ) im Bereich [10°, 60°] ausgeführt ist.

7. Fallschutzvorrichtung (2) für ein zweirädriges Fahrzeug (1) nach einem der Ansprüche 1 bis 5, **dadurch gekennzeichnet, dass** das Einstellmittel (4) zum Erhalt eines beliebigen Werts für den maximalen Winkel (Cₘₐₓ) im Bereich [10°, 60°] ausgeführt ist.

8. Fallschutzvorrichtung (2) für ein zweirädriges Fahrzeug (1) nach einem der Ansprüche 1 bis 7, **dadurch gekennzeichnet, dass** das Einstellmittel (4) zwischen dem Sicherheitsrad (3) und dem Verbindungsmittel (5) positioniert ist.

9. Fallschutzvorrichtung (2) für ein zweirädriges Fahrzeug (1) nach einem der Ansprüche 1 bis 8, **dadurch gekennzeichnet, dass** das Einstellmittel (4) lösbar an dem Sicherheitsrad (3) und an dem Verbindungsmittel (5) befestigt ist.

10. Fallschutzvorrichtung (2) für ein zweirädriges Fahrzeug (1) nach einem der Ansprüche 1 bis 9, **dadurch gekennzeichnet, dass** das Einstellmittel (4) entlang einer festen Richtung zum Erhalt eines maximalen Winkels (γₘₐₓ) im Bereich [10°, 60°] ausgeführt ist.

11. Fallschutzvorrichtung (2) für ein zweirädriges Fahrzeug (1) nach einem der Ansprüche 1 bis 10, **dadurch gekennzeichnet, dass** das Verbindungsmittel (5) eine nicht verformbare röhrenförmige Struktur aufweist.

12. Fallschutzvorrichtung (2) für ein zweirädriges Fahrzeug (1) nach einem der Ansprüche 1 bis 11, **dadurch gekennzeichnet, dass** das Verbindungsmittel (5) eine nicht verformbare röhrenförmige Struktur aus Metall, vorzugsweise aus Aluminium, umfasst.

13. Zweirädriges Fahrzeug (1), das mit einer Fallschutzvorrichtung nach einem der Ansprüche 1 bis 12 ausgestattet ist.

## Claims

1. Anti-fall device (2) for a two-wheeled vehicle (1) fitted with tyres, the centre of gravity (G) of the vehicle moving around a circular trajectory of centre 0 and radius R at a speed V, the midplane (P) of the vehicle, containing the centre of gravity (G), forming a camber angle (C) with the vertical plane (XZ) tangential to the trajectory, the camber angle (C) increasing with the speed V of the vehicle and being variable between a zero angle and a limiting angle (Cₗᵢₘ) beyond which the transverse grip of the tyres is lost, causing the vehicle to fall, the anti-fall device (2) being attached laterally to the inside of the vehicle in relation to the trajectory, limiting the camber angle (C), when the speed V increases, to a maximum angle (Cₘₐₓ) strictly greater than the limiting angle (Cₗᵢₘ), **characterized in that** the anti-fall device (2) includes a safety wheel (3) of centre (G₁), the midplane (P₁) of which intersects the midplane (P) of the vehicle along a straight line located above the ground and forming an angle (a) that differs from the maximum angle (Cₘₐₓ) by up to 5°, means (4) for adjusting the maximum angle (Cₘₐₓ) and linking means (5) between the safety wheel (3) and the vehicle (1).

2. Anti-fall device (2) for a two-wheeled vehicle (1) according to Claim 1, **characterized in that** the maximum angle (Cₘₐₓ) is at least 10° and at most 60°, and preferably at least 20° and at most 45°.

3. Anti-fall device (2) for a two-wheeled vehicle (1) according to either of Claims 1 and 2, **characterized in that** the centre (G₁) of the safety wheel (3) is positioned at a distance (L) from the midplane (P) of the vehicle (1), such that the centre (G₁) of the safety wheel (3) describes a circular trajectory, the centre (O₁) of which is coaxial to the centre (0) of the circular trajectory of the centre of gravity (G) of the vehicle, and the radius (R₁) of which is not greater than the radius (R) of the circular trajectory of the centre of gravity (G) of the vehicle.

4. Anti-fall device (2) for a two-wheeled vehicle (1) according to any one of Claims 1 to 3, **characterized in that** the centre (G₁) of the safety wheel (3) is positioned substantially in the vertical plane (YZ) passing through the centre of gravity (G) of the vehicle and perpendicular to the midplane of the vehicle (1).

5. Anti-fall device (2) for a two-wheeled vehicle (1) according to any one of Claims 1 to 4, **characterized in that** the straight line (D₁) that is the intersection between the substantially horizontal ground and the midplane (P₁) of the safety wheel (3) in contact with the ground forms an angle of opening (d) of between 0° and 5° with the straight line (D) that is the intersection between the midplane (P) of the vehicle (1) and the substantially horizontal ground.

6. Anti-fall device (2) for a two-wheeled vehicle (1) according to any one of Claims 1 to 5, **characterized in that** the adjustment means (4) are designed to offer a discrete number of maximum angle (Cₘₐₓ) values within the range [10°, 60°].

7. Anti-fall device (2) for a two-wheeled vehicle (1) according to any one of Claims 1 to 5, **characterized in that** the adjustment means (4) are designed to offer any maximum angle (Cₘₐₓ) value within the range [10°, 60°].

8. Anti-fall device (2) for a two-wheeled vehicle (1) according to any one of Claims 1 to 7, **characterized in that** the adjustment means (4) are positioned between the safety wheel (3) and the linking means (5).

9. Anti-fall device (2) for a two-wheeled vehicle (1) according to Claims 1 to 8, **characterized in that** the adjustment means (4) are attached detachably to the safety wheel (3) and to the linking means (5).

10. Anti-fall device (2) for a two-wheeled vehicle (1) according to Claims 1 to 9, **characterized in that** the adjustment means (4) are adjustable in a fixed direction, in order to obtain a given maximum angle (γₘₐₓ) within the range [10°, 60°].

11. Anti-fall device (2) for a two-wheeled vehicle (1) according to any one of Claims 1 to 10, **characterized in that** the linking means (5) include an non-deformable tubular structure.

12. Anti-fall device (2) for a two-wheeled vehicle (1) according to Claims 1 to 11, **characterized in that** the linking means (5) include an non-deformable metal tubular structure, preferably aluminium.

13. Two-wheeled vehicle (1) fitted with an anti-fall device according to any one of Claims 1 to 12.
